# EUROPEAN PATENT APPLICATION

(11) **EP 1 867 230 A2**
(43) Date of publication of application: **19.12.2007**
(21) Application number: 07388037.9
(22) Date of filing: 29.05.2007
(51) Int. Cl.: A01N 65/00, A01N 61/00, A01P 21/00, A01P 3/00

(54) **A natural product having a fungus inhibiting effect on specific fungal pathogens and a growth promoting effect for improving plant production**

(30) Priority: 29.05.2006 DK 200600154
(71) Applicant: Nor-Natur ApS, 2650 Hvidovre (DK)
(72) Inventor: Bengtsson, Marianne, Vibeke, 2860 Søborg (DK); Hockenhull, John, Rodney, 2300 Copenhagen S (DK); Elgaard, Troels, 2660 Brøndby Strand (DK); Nielsen, Beatrice, Konstanze, Klinzing, 2650 Hvidovre (DK); Damsø, Mette, 2660 Brøndby Strand (DK)
(74) Representative: Zeuthen-Aagaard, Henrik

(57) **Abstract**

A natural product having a fungus inhibiting effect on specific fungal pathogens and a growth promoting effect for improving plant production including at least two active substance containing components. The components are derived from
a) quillaja *(Quillaja saponaria),*
b) quinoa *(Chenopodium quinoa* ),
c) tea *(Camellia* spp., e.g. *Camellia oliefera, Camellia sinensis, Camellia chekiangoleosa, C.drupifera, C.reticulata og C.japonica)* and
d) a saponin containing plant material not belonging to (a), (b) or (c).

The product has a fungus inhibiting effect preventing and curing fungal diseases as well as a growth promoter and is useful in plant production, mainly fruit and vegetable production, with improved yields and quality of the plant products.

## Description

### Technical field

The present invention relates to a natural product having a fungus controlling effect on specific fungal pathogens and a and growth promoting effect for improving plant production.

### Technical background

It is well-known that fungus diseases can have important economic consequences e.g. in orchards and in growing vegetables. An example is apple favus/common scab, caused by the fungus *Venturia inaequalis*, which is the most frequent cause of poor quality of apples. Apple scab causes brown or black spots on the fruit, and in some years and on some varieties it attacks so heavily that the apples become very small, malformed and totally unfit for consumption. This fungal disease causes a heavy decline in yield and quality, both in organic and conventional production.

Some organic growers wish to use organic fungicides in attempts to control the fungus disease. In Denmark, only use of elemental sulphur is allowed, and this does not have any curative effect on apple favus/common scab. In other European countries, use of more effective lime sulphur and copper fungicides is permitted in organic apple production. The use of copper has been forbidden in organic apple growing in Denmark for more than 10 years and it is being phased out in the EU. Thus, there is a strong need for alternatives.

Also in the conventional production of fruit and vegetables fungal diseases cause huge problems, and chemical fungicides are used in large amounts in order to limit the damage. Some fungicides, e.g. pyrimethanil and tolylfluanid, which are declared as environmentally dangerous, poisonous and locally irritating, are used to a large degree. The use of such fungicides can result in residues in fruit and vegetables and a recent estimation from the Danish Veterinary and Food Administration has shown that 61 percent of the apples tested contained fungicidal residues.

An alternative to copper, sulphur and chemical fungicides can be found in natural materials. It is known that many plants contain different functional, fungicidal and/or antibacterial substances, among others saponins, flavonoids, tannins, hydroxycymens and terpens, and the utilization of such active elements from plants in pharmaceuticals for use by humans and animals is also known. Besides fungicidal activity against plant patogens another mechanism is based on activating the natural defense mechanisms of the plant, which is also called induced resistance.

An example of a plant which can be used as a natural fungicide is soap bark tree *(Quillaja saponaria).* The active elements are thought to be saponins, which generally have a great toxic effect on fungi due to interactions with steroles in the membrane of the cells (Francis et al., 2002. The biological action of saponins in animal systems: A review. British Journal of Nutrition 88, 587-605).

It is well-known that tea *(Camellia* spp.) has been used as alternative medicine, especially in Asia for centuries. Tea is thought to have an effect against e.g. cancer, acting by immune stimulation and having an antimicrobial effect (Ishihara et al., 2001 Improvement of intestinal micro flora balance and prevention of digestive and respiratory organ diseases in calves by green tea extracts. Livestock Production Science 68, 217-229). The effect is often said to be a result of the content of polyphenols in tea, primarily catechins, which have a large antioxidative capacity. The content of saponins in tea and tea products might as well have a useful effect, e.g. against fungal diseases in plant production.

Antifungal activity has been found *in vitro* in saponins from quinoa (Favel et al., 1994: In vitro antifungal activity of triterpenoid saponins. Planta Med 60, 50-53.). Oleanolic acid saponins, which can as well be found in quinoa, did as well show an effect against insects (Mexican bean bettle grub) (Marquina et al., 2001: Bioactive oleanolic acid saponins and other constituents from the roots of Viguiera decurrens. Phytochemistry 56 (1), 93-97).

Various patents describe quinoa and quillaja as a basis for protection of plants against diseases caused by bacteria (US 2003162731 and US2005261129 and CA2482090) and as a protection against both diseases caused by both bacteria and fungus (WO0160153). However, none of the patents describes an improved yield effect. Furthermore no mention is made of any effect against fungal pathogens belonging to the orders, families, genera and species mentioned below in the "Brief description of the invention".

### Brief description of the invention

The purpose of the present invention is to improve the yield and quality in plant production based on the use of a natural product having fungus inhibiting and growth promoting effect.

This is obtained by the present natural product according to the invention having an antifungal or fungus inhibiting and growth promoting effect for improving plant production including at least two of the following active substance containing components:
a) a component derived from quillaja *(Quillaja saponaria).*
b) a component derived from quinoa *(Chenopodium quinoa* ).
c) a component derived from tea *(Camellia* spp., e.g. *Camellia oliefera, Camellia sinensis, Camellia chekiangoleosa, C.drupifera, C.reticulata og C.japonica).*
d) a component derived from a saponin containing plant material not belonging to (a), (b) or (c).

The inventive natural product shows effect against fungus from the orders, families, genera and species mentioned below. Such effect is not disclosed in the above mentioned patent documents.
- Taphrinales like the family *Taphrinaceae, Taphrina, T. deformans*
- Erysiphales like the family *Erysiphaceae, Sphaerotheca, S. pannosa var. Pannosa, Podosphaera, P. leucotricha, Microsphaera, M. begoniae*
- Erysiphales, *Hypocreaceae, Nectria,* N. galligena
- Loculoascomycertes , Pleosporales, the family *Venturiaceae,* the genus *Venturia* and the species *V. inaequalis* og *V. pirina*
- Discomycetes, Helotiales, *Dermataaceae,* the genus *Pezicula,* the species *P. alba, P. malicorticis* and the genus *Blumeriella,* the species *B. jaapi*
- Melanconiales, *Marssonina, M. rosae*
- From Hyphomycetes
   o The genus *Monilia,* the species *M. fructigena* and *M. laxa*
   o The genus *Penicillium,* the species *P. expansum*
   o The species *Botrytis. cinerea*
   o The genus *Zygophiala, Z. jamaicensis*
- From Basidiomycotina , the class *Teliomycetes, Uredinales, Pucciniaceae, Gymnosporangium, G. sabinae* and G. *fuscum*

Another patent describes saponins in pathogen control (US 5639794). However, also Quillaja is mentioned in this patent with effects on:
- *S. pannosa*
- *Penicillium*
- *Botrytis*
- *Gymnosporangium* and the *Pucciniacea* family

In those embodiments of the present invention, wherein the inventive product includes the *Quillaja* component (a) the product differs from the disclosure of US 5639794, by the combination of the *Quillaja* component with one or more components (b, c and/or d). US 5639794 discloses the use of saponin as a synergist with other components, as cinnamic aldehyde and coniferyl aldehyde, whereas the present invention proposes the use of at least two different plant components which all includes saporins as active compounds.

The inventive product based on a combination of different saporin containing plant materials has a surprising fungus inhibiting and growth promoting effect leading to an improved yield and quality in plant production, for example in production of apples. Also in case of ornamental plants, both in plant nurseries, parks and gardens, and in forestry, the protection and growth benefits obtained by the inventive product are contemplated. Accordingly the term "plant production" is intended to also cover growth and maintenance of such plants.

Thus the product appears to have a prophylactic and curative effect against apple scrab attacts. The reason for these effect is not been completely understood, but it is believed to be based on a surfactant effect, a fungicidal or fungus inhibiting effect and/or induction of host resistance.

Thus it is believed that the inventive combination of the mentioned plants both have an effect against the mentioned pathogenic fungi and improved effect on the yield and quality.

Furthermore, many of the known fungicides are based on synthetic products which are costly and not always effective. Thus, there is a need for a cost effective alternative as proposed by the present invention.

Other fungal diseases in addition to apple scab can have huge economical consequences for organic and traditional growing of e.g. fruit, vegetables and ornamentals. As an example the following can be mentioned:

### Foliage diseases such as

Apple scab (*Venturia inaequalis*)
Cherry leaf spot (*Blumeriella jaapi*)
Black spot of roses (*Marssonina rosae*)
Pear scab (*Venturia pirina*)

### Powdery mildew on different plants such as

Rose powdery mildew *(Sphaerotheca pannosa* var. *pannosa)*
Begonia powdery mildew *(Microsphaera begoniae)*
Apple and pear powdery mildew *(Podosphaera leucotricha)*
American gooseberry mildew *(Sphaerotheca mors-uvae)* attacking blackcurrant and gooseberry *(Ribes spp.)*
Strawberry powdery mildew *(Sphaerotheca macularis)*
Grape powdery mildew *(Unicula necator)*
Cucumber powdery mildew *(Erysiphe cichoracearum* and other powdery mildew fungi attacking *Cucurbita & Cucumis* spp.)
And other powdery mildew pathogens on other plants

### Postharvest diseases on fruit such as

Brown rot / Spur canker *(Monilia fructigena*, *M. laxa)*
Penicillium Rot *(Penicillium expansum)*
Gloeosporium Rot / Gloeosporium canker *(Pezicula alba*, *P. malicorticis)*

### Downy mildews & late blight

Fungi-like pathogenic organisms within the Oomycota including in particular important members of *Peronosporaceae* causing downy mildews including for example grape downy mildew *(Plasmopara viticola*), cucumber downy mildew *(Pseudoperonospora cubensis),* onion downy mildew *(Peronospora destructor)* and other species on other plants and also members of *Pythiaceae* causing late blight of plants belonging to So*lanaceae* including *Phytophthora infestans* attacking potatoes and tomatoes.

### Other serious plant diseases such as

Sooty blotch *(Gloeodes pomigena)* and fly speck *(Zygophiala jamaicensis)* on apples
Grey mould *(Botrytis cinerea)* on different plants such as *Pelargonium* spp.
Peach leaf curl *(Taphrina deformans)*
Pear rust *(Gymnosporangium sabinae*/*G. fuscum)*
Canker *(Nectria galligena)* on fruit trees
Rust *(Phragmidium tuberculatum* and other *Phragmidium* species) on roses (Rosa spp.)

Surprisingly, it has been shown that a product in the form of a combination of at least two different sources of natural active elements, e.g. chosen among components extracted from Quillaja, Quinoa, Tea and other plant materials, is an outstanding solution to these problems, probably because of a synergistic effect. However, it is as well assumed that other unknown mechanisms contribute to the surprising effect, which arises by mixing natural active elements from different plants.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed description of the invention

As mentioned above the present invention relates to a natural product having a fungus inhibiting and growth promoting effect for improving plant production including active substance containing components derived from at least two different plant materials, preferably saponin containing plant materials.

These different component are:
a) a component derived from quillaja *(Quillaja saponaria*).This component (a) can preferably be obtained from twigs and bark from soap bark tree and/or from a byproduct based on quillaja products, and/or an extract of these.
b) a component derived from quinoa *(Chenopodium quinoa* ). This component (b) can preferably be obtained from quinoa and/or from a byproduct based on quinoa, and/or an extract of these.
c) a component derived from tea *(Camellia* spp., e.g. *Camellia oliefera*, *Camellia sinensis, Camellia chekiangoleosa, C.drupifera, C.reticulata og C.japonica).* This component (c) can preferably be obtained from tea and/or a byproduct based on plants belonging to the genera *Camellia,* and/or an extract of these.
d) a component derived from a saponin containing plant material not belonging to (a), (b) or (c).

Non-limiting examples of plant materials usable as the component (d) are fenugreek *(Trigonella foenum),* rosemary *(Rosmarinus officinalis)* and capsicum *(Capsicum* spp.).

Generaly, the components (a), (b), (c) and (d) are preferably obtained from the appropriate plants and/or part of plants including stems, leaves, twigs, bark, seeds, shells and/or by-products based on plants and/or part of plants and/or extracts based on plants and/or part of plants; and any combination thereof.

Furthermore, the invention relates to the use of the inventive product protection of plants and yield improvement in plant production. By such use it is possible to control specific fungal diseases in plant production as well as growth promotion in plant production, primarily fruit and vegetable growing and primarily apple caused by the fungus *Venturia inaequalis*, and other diseases, primarily:

### Foliage diseases such as

Apple scab *(Venturia inaequalis*)
Cherry leaf spot *(Blumeriella jaapi*)
Black spot of roses *(Marssonina rosae)*
Pear scab *(Venturia pirina)*

### Powdery mildew on different plants such as

Rose powdery mildew *(Sphaerotheca pannosa* var. *pannosa)*
Begonia powdery mildew *(Microsphaera begoniae)*
Apple and pear powdery mildew *(Podosphaera leucotricha)*
American gooseberry mildew (*Sphaerotheca mors-uvae)* attacking blackcurrant and gooseberry (Ribes spp.)
Strawberry powdery mildew *(Sphaerotheca macularis)*
Grape powdery mildew *(Unicula necator)*
Cucumber powdery mildew *(Erysiphe cichoracearum* and other powdery mildew fungi attacking *Cucurbita* & *Cucumis* spp.)
Other powdery mildew pathogens on other plants

### Postharvest diseases on fruit such as

Brown rot / Spur canker *(Monilia fructigena, M. laxa)*
Penicillium Rot *(Penicillium expansum)*
Gloeosporium Rot / Gloeosporium canker *(Pezicula alba, P. malicorticis)*

### Downy mildews & late blight

Fungi-like pathogenic organisms within the Oomycota including in particular important members of *Peronosporaceae* causing downy mildews including for example grape downy mildew *(Plasmopara viticola*), cucumber downy mildew *(Pseudoperonospora cubensis),* onion downy mildew *(Peronospora destructor)* and other species on other plants and also members of *Pythiaceae* causing late blight of plants belonging to So*lanaceae* including *Phytophthora infestans* attacking potatoes and tomatoes.

### Other serious plant diseases such as

Sooty blotch *(Gloeodes pomigena)* and fly speck *(Zygophiala jamaicensis)* on apples
Grey mould *(Botrytis cinerea)* on different plants such as *Pelargonium* spp.
Peach leaf curl *(Taphrina deformans)*
Pear rust *(Gymnosporangium sabinae*/*G. fuscum)*
Canker *(Nectria galligena)* on fruit trees
Rust *(Phragmidium tuberculatum* and other *Phragmidium* species) on roses (Rosa spp.)

Use of the inventive natural product make it possible to obtain a yield and quality improvement in the plant production, primarily in the fruit and vegetable growing primarily fruit growing.

The inventive product may partly be based on waste products that do not have any other practical application at the moment, which makes the active components very cheap and cost effective and simplifies production of the inventive product.

One or more of the active components in the inventive product can be obtained from bi-products, which are results of the production of conventional plant products. Thus, an active component (Component a) can be found on the basis of the soap bark tree *(Quillaja saponaria),* from branches and the bark of the tree, which are milled and dried. Quillaja can as well be used as an extract of flakes from branches and the bark from the soap bark tree. The extract can be based on pure water extraction or a blend of water and alcohol as a means of extraction. The extract can be used as a liquid product or it can be spray dried.

Another of the possible active components (component b) contained in the inventive product can be found on the basis of quinoa *(Chenopodium quinoa).* Quinoa *(Chenopodium quinoa)* comes from the highland around the Titicaca Sea. Quinoa has been grown since 5000 BC and in that way it is one of the world's oldest crops. It is one of the most important crops in the Andes region, where it is used as food with a high nutrition value. The seed of Quinoa contains an embryo covered with bitter bran with a high content of saponins, which has to be removed before quinoa can be used in cooking and for feed. It is estimated that 10 % of harvest is meal from the bran. The bran is removed by mechanical milling. The saponins can as well be washed out of the untreated seed of quinoa (incl. the bran), by water. The content of saponin in the meal from the bran is estimated to be 10-15%.

By washing the untreated seeds of quinoa (incl. bran) the resulting liquid product can be dried and reach a water content of less than 8-15%, usually with maximum water content of 10 % or it can be preserved, for instance by adding 0 to 30 weight% NaCl, or another kind of salt, and afterwards stored for later drying. In order to secure good keeping quality, it can be an advantage to add 0 to 5 % of an acid, which can be accepted in feed, such as citric acid, tartaric acid or lactic acid or a mixture of these, whose addition at the same time has a positive influence on the effect of the product.

The bran meal product can if necessary be further concentrated by removing some of the water in the product. This happens by filtration, extraction, centrifuging and by other conventional methods.

Thus, the second component of the invention (component b) concerns a product based on dried and milled quinoa bran meal or an extract of this or a concentrated liquid from the washing of the untreated seeds of quinoa (incl. bran).

According to the invention the additive can as well contain a third type of active components (component c), which can be obtained on the basis of *Camellia* spp. e.g. Ca*mellia oliefera, Camellia sinensis, Camellia chekiangoleosa, C.drupifera, C.reticulata and C.japonica.*

Finally, according to the invention the product can also contain a component (component d), which can be obtained on the basis of another plant, selected among saponinrich plants.

The component based on tea can be based on dried and milled parts, primarily leaves from the tea plant or an extract thereof. The component does as well include products based on tea seeds or tea seed fruits, which comes from a tea plant from the Camellia genus (e.g. *Camellia oliefera*), that bear fruits, called Tea Seed. The fruit contains oil, which can be extracted for food and cosmetics. The byproduct from the oil pressing is called "Tea Seed cake". The component does as well include bi-products from such tea-based products. The Tea Seed cake, which is a result of this, is pressed and dried. The component can be based on extracts from Tea Seed cake as well as other by-products. The extract can be based on water, alcohol or a combination of this.

The component based on another saponin containing plant can be based on the dried and milled top or an extract of saponin containing plants. The component also includes byproducts, for example from production of oils. The extract can be based on water, alcohol or a combination of these.

Presses residue products from tea production can immediately after the extraction of the oil be dried down to a water content of maximum 8 - 15 weight %, usually a maximum water content of 10% water, or possibly down to 8 % water, or it can be preserved, for example by the addition of 0 to 10 weight % NaCl, or another salt, and afterwards stored for later drying, or it can be preserved. To further ensure the quality, it is an advantage to add 0 to 5 % of a for the purpose acceptable acid, such as citric acid, tartaric acid, or lactic acid or a combination of these, whose addition at the same time has a positive influence on the products effect, one of the reasons being that anthocyanin and citric and tartaric acid works as synergists. Likewise, it can be an advantage to add sodium benzoate or potassium sorbate.

The press residues products and the dried and milled plant leaves can to a necessary extent be further preserved by removal of a part of the water in the product. This can be done by filtering, by extraction, by centrifugation and by the conventional methods.

Quillaja, quinoa, tea, tea seed, byproducts from production of oil as well as other saponin containing plants, contain a series of interesting active substances. Among the most important are saponins, both triterpene and steroid saponins, and polyphenols

The inventive product has among others the following positive effects:
- Protection against fungus in plant production, mainly in fruit and vegetable production. The protection can both be preventive and curative.
- Improvement of the yield

As mentioned above, the reason for the protection has not been completely explained, but it is believed to be based on a surfactant effect, an anti-fungal effect and/or an induction of host resistance. The anti-fungal effect might be a fungicidal effect, but it is more likely a mere fungus inhibiting effect preventing fungal attacks on the plants.

The natural product according to the invention can with great benefit be used in fruit and vegetable production.

For example apple scab caused by the fungus *Venturia inaequalis* can be mentioned, but also other fungi can probably be controlled and inhibited with the invention, primarily the following:

### Foliage diseases such as

Apple scab *(Venturia inaequalis)*
Cherry leaf spot *(Blumeriella jaapii)*
Black spot of roses *(Marssonina rosae*)
Pear scab *(Venturia pirina)*

### Powdery mildew on different plants such as

Rose powdery mildew *(Sphaerotheca pannosa* var. *pannosa)*
Begonia powdery mildew *(Microsphaera begoniae)*
Apple and pear powdery mildew *(Podosphaera leucotricha)*
American gooseberry mildew *(Sphaerotheca mors-uvae)* attacking blackcurrant and gooseberry (Ribes spp.)
Strawberry powdery mildew *(Sphaerotheca macularis)*
Grape powdery mildew *(Unicula necator)*
Cucumber powdery mildew *(Erysiphe cichoracearum* and other powdery mildew fungi attacking *Cucurbita & Cucumis* spp.)
Other powdery mildew pathogens on other plants

### Postharvest diseases on fruit such as

Brown rot / Spur canker *(Monilia fructigena, M. laxa)*
Penicillium Rot *(Penicillium expansum)*
Gloeosporium Rot / Gloeosporium canker *(Pezicula alba, P. malicorticis)*

### Downy mildews & late blight

Fungi-like pathogenic organisms within the Oomycota including in particular important members of *Peronosporaceae* causing downy mildews including for example grape downy mildew *(Plasmopara viticola),* cucumber downy mildew *(Pseudoperonospora cubensis),* onion downy mildew *(Peronospora destructor)* and other species on other plants and also members of *Pythiaceae* causing late blight of plants belonging to So*lanaceae* including *Phytophthora infestans* attacking potatoes and tomatoes.

### Other serious plant diseases such as

Sooty blotch (*Gloeodes pomigena*) and fly speck *(Zygophiala jamaicensis)* on apples
Grey mould *(Botrytis cinerea)* on different plants such as *Pelargonium* spp.
Peach leaf curl *(Taphrina deformans)*
Pear rust *(Gymnosporangium sabinae*/*G. fuscum)*
Canker *(Nectria galligena)* on fruit trees
Rust *(Phragmidium tuberculatum* and other *Phragmidium* species) on roses (Rosa spp.)

### Formulation of commercial products according to the invention

Depending on the concentration and variation of relevant substances in the raw materials, it can be necessary according to the invention to mix the raw material with a suitable carrier, so that a final product is made, which both is reasonably standardized and in a technically suitable form, not too concentrated so that it can be mixed directly at the producer of plant protection preparations, as well as by the farmer himself.

To obtain the mentioned characteristics of the commercial products, suitable carriers or anticoagulation agents can be added. Suitable carriers and/or adjuvants are primarily mineral carriers in the form of silicium oxides, clay minerals, and zeolites, especially sepiolite, clinoptilolite and sipernate - and secondary vegetable carriers such as wheat flour, wheat bran, soy bran meal, etc. Calcium carbonate can also be a usable carrier, not as much because of its technical abilities, but because of its low price. The same goes for grape seed flour, which is a known carrier, commonly used in animal food. Maltodextrin is likewise a commonly used technical substance.

The dosage of the inventive product will typically pr. ha be 0,01 - 100 kg of component a and/or 0,01-100 kg of component b and/or 0,01-100 kg of component c and/or 0,01-100 kg of component d, calculated as dry matter. The dosage can favorably be 1 - 50 g of the single possible component and more specifically 10 - 50 g of the single components.

The total quantity (a,b,c and d) with two or more components is typically 0,01- 300 kg calculated as dry matter used pr ha., such as 1 - 100 kg, especially 10- 50 kg.

The additive contains at least two of the mentioned components, for example in weight ratio 1:99 to 99:1, mainly 80:20 to 20:80, especially 70:30 to 30:70 calculated as dry matter.

Preferred embodiments are the combinations (components a + b), (components a + c), or (components a + d), preferably in the above ratios. Alternative preferable embodiments are (components b + c), (components b + d) or (components c + d), preferably in the above ratios.

With three or four components, the ratio between each of two components can likewise be 1:99 to 99:1, mainly 80:20 to 20:80, especially 70:30 to 30:70 calculated as dry matter. Further preferred embodiments are the combinations (components a + b + c), (components a + b + d), (components b + c + d), (components a + c + d), or (components a + b + c+ d), preferably in the above ratios.

According to preferred embodiment, the components are added in the following weight proportions for usage pr ha and calculated as dry matter.
1: 1-10 kg of component c (tea) + 1 - 10 kg component b (quinoa);
2: 1 - 10 kg of component c (tea) + 1 - 5 kg of component a (quillaja) + 1 - 5 kg of component b (quinoa);
3: 1 - 10 kg of component c (tea) + 1 -10 kg of component a (quillaja)
4: 1 -10 kg of component a (quillaja) + 1 -10 kg of component (quinoa);

The above noted weight proportions refer to dry matter. If the plant material is used in another form, for example if the components are in the form of dried, milled leaves or in a liquid extract, the quantity should be such that it contains a corresponding quantity of active substances.

The product according to the invention has shown to a substantial and surprising influence on the control of fungal diseases. It is expected that the product also has an effect on the control of other plant diseases.

### Examples

For the verification of the inventive product, a series of tests have been made on apple seedlings grown under controlled conditions in growth chambers.

### Material and method:

Seeds from apple (*Malus* x *domestica* 'Golden delicious' stratified at 4°C in about 3 weeks, potted separately in soil and grown at 15°C (12 hours light / 12 hours dark) in approximately 4 weeks until the plants have minimum 4 leaves.

lnoculum of a single spore isolate of *Venturia inaequalis* is made (1.5 x 10⁵ conidia / ml) by the method according to Williams (Williams, E.B. 1978. Handling the apple scab organism in laboratory and greenhouse. Proceedings of Apple and Pear Scab Workshop, Kansas City, Missouri, July 1976. New York State Agricultural Experiment Station, Geneva. Special Report 28: 16-18) and stored at -18°C until usage.

Extracts of plant products are tested separately or in combinations. Aqueous suspensions of liquid plant products are made in concentrations for example 5%, 2½% and 1% (w/v). Aqueous extracts of milled plant products are made in the concentrations 5%, 2½% and 1% (w/v) and filtered through polyester mesh. The combinations of products are tested in concentrations, for example 2½% and 1%. As reference treatment, sulphur (0.27% w/v) and water (control) is used.

Apple seedlings are inoculated with a hand sprayer, incubated under polyester cover without light for 2 days. The day before (preventive testing) or the day after (curative testing) extracts of plant products are added by hand sprayer (8 plants per treatment). The plants are incubated, at 15°C in (12 hours light / 12 hours darkness) under a clear polyester cover with ventilation holes in two weeks after inoculation, after which the symptoms of apple scab are assessed on inoculated and treated leaves, on a scale of 0-7 (0= no symptoms, 7= More than 75% attacked leaf area). Effect of treatment is analyzed statistical with SAS, version 8.2 (Statistical Analysis System, SAS Institute, Cary, NC).

### RESULTS

The following products have been test separately and in combinations:
- QUILLAJA LIQUID: liquid aqueous extract of leaves and bark of soap bark tree.
- Quillaja powder: liquid aqueous extract of leaves and bark of soap bark tree.
- QUINOA powder: liquid aqueous extract of quinoa brans.
- Quinoa Bolivia red powder: liquid aqueous extract of quinoa brans.
- FENUGREEK powder: liquid aqueous extract of milled fenugreek.
- TEA: Aqueous extract of Tea Seed Cake

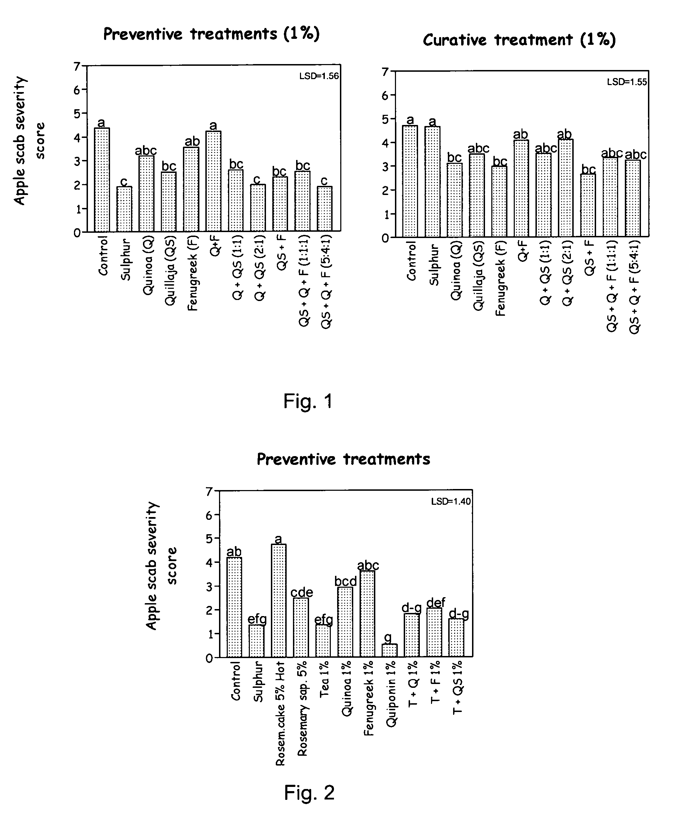

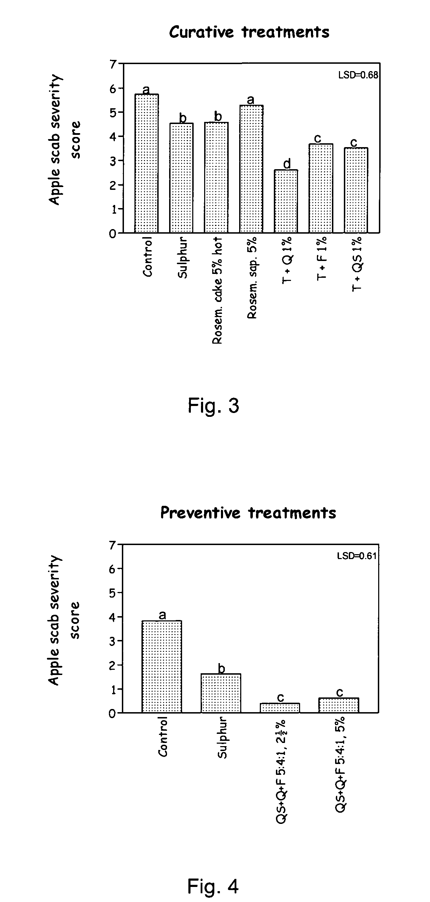

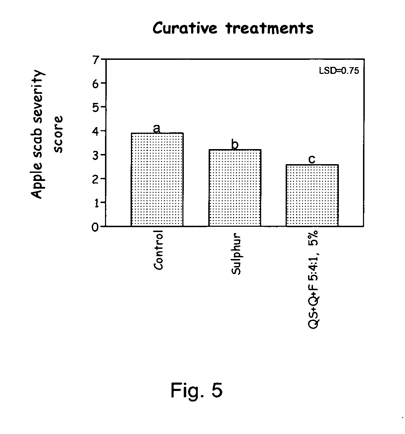

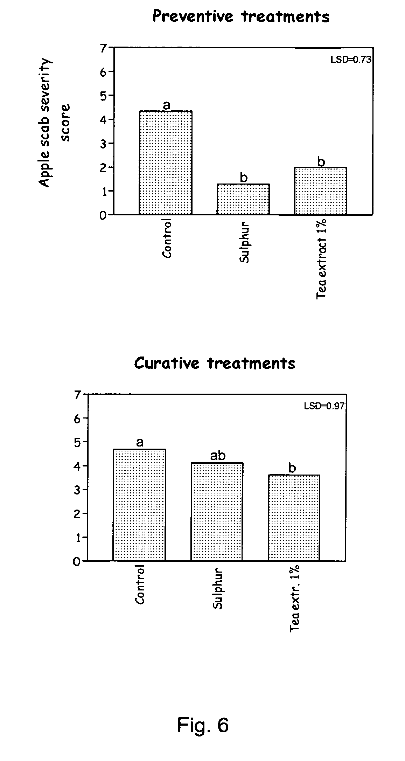

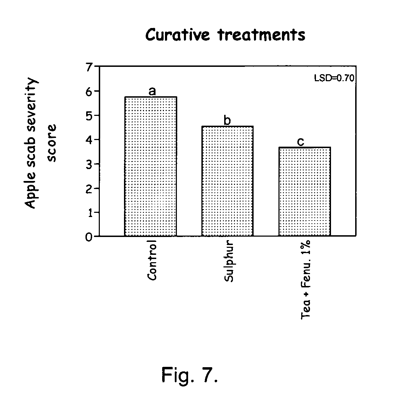

The following results shown in the figures 1 - 7 are from a preventive and a curative trial with quinoa, quillaja, rosemary, tea and fenugreek tested separately and in combinations, where the total concentration has been 1%-5%.

### Description of the figures 1 - 7

Figure 1. Apple scab symptoms (0 = no symptoms, 7 = more than 75% scab covering the leaves) on apple plants treated preventively (left) and curatively (right) respectively with 1% extracts of the plant products Quinoa (Q), Quillaja (QS), Fenugreek (F), separately or in combinations compared with water (control) or sulphur (0.27%).
Figure 2. Apple scab symptoms (0 = no symptoms, 7 = more than 75% covering the leaves) on apple plants treated preventively with 1 % or 5% extracts of the plant products Rosemary Cake, Quinoa (Q), Quillaja (Quiponin; QS), Fenugreek (F) and Tea (T) separately or in combinations compared with water (control) or sulphur (0.27%).
Figure 3. Apple scab symptoms (0 = no symptoms, 7 = more than 75% covering the leaves) on apple plants treated curatively with 1% or 5% extracts of the plant products Rosemary Cake, Quinoa (Q), Quillaja (QS), Fenugreek (F) and Tea (T) separately or in combinations compared with water (control) or sulphur (0.27%).
Figure 4. Apple scab symptoms (0 = no symptoms, 7 = more than 75% covering the leaves) on apple plants treated preventively with 2.5% and 5% extracts of the plant products Quinoa (Q), Quillaja (QS) and Fenugreek (F) in combinations compared with water (control) or sulphur (0.27%).
Figure 5. Apple scab symptoms (0 = no symptoms, 7 = more than 75% covering the leaves) on apple plants treated preventive with 2.5% and 5% extracts of the plant products Quinoa (Q), Quillaja (QS) and Fenugreek (F) in combinations compared with water (control) or sulphur (0.27%).
Figure 6. Apple scab symptoms (0 = no symptoms, 7 = more than 75% covering the leaves) on apple plants treated preventively (left) and curatively (right) with 1% extracts of the plant products tea extract compared with water (control) or sulphur (0.27%).
Figure 7. Apple scab symptoms (0 = no symptoms, 7 = more than 75% covering the leaves) on apple plants treated curative with 1% extracts of the plant products tea extract and fenugreek compared with water (control) or sulphur (0.27%).

The trials showed that representative combinations have an improved effect compared with the single components and the control, as well as a preventive treatment have an effect on a level with sulphur, while some of the single components and the combinations had a significantly better effect than sulphur tested as curative treatments.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. A natural product having a fungus inhibiting and growth promoting effect for improving plant production including at least two of the following active substance containing components:
a) a component derived from quillaja *(Quillaja saponaria*),
b) a component derived from quinoa *(Chenopodium quinoa* ),
c) a component derived from tea *(Camellia* spp., e.g. *Camellia oliefera*, *Camellia sinensis, Camellia chekiangoleosa, C. drupifera, C.reticulata og C. japonica),*
d) a component derived from a saponin containing plant material not belonging to (a), (b) or (c).

2. Product according to claim 1, **characterized by** that the components (a), (b), (c) and (d) are obtained from plants and/or part of plants including stems, leaves, twigs, bark, seeds, shells and/or by-products based on plants and/or part of plants and/or extracts based on plants and/or part of plants; and any combination thereof.

3. Product according to any of the previous claims, formulated as a preparation including
0.1 - 99.9 % by weight of the component (a), and/or
0.1 - 99.9 % by weight of the component (b), and/or
0.1 - 99.9 % by weight of the component (c), and/or
0.1 - 99.9 % by weight of the component (d),
based on the total amount of the components (a, b, c and d) calculated as dry matter

4. Product according to any of the previous claims, formulated as a preparation including
10 - 90% by weight of the component (a), and/or
10 - 90% by weight of the component (b), and/or
10 - 90% by weight of the component (c), and/or
10 - 90% by weight of the component (d),
based on the total amount of the components (a, b, c and d) calculated as dry matter

5. Product according to any of the previous claims formulated as a preparation in a form suitable for distribution on a plant production area, **characterized in, that** the total amount of the components (a, b, c and d) in the preparation is 0,01 to 300 kg calculated as dry matter per ha of the plant production area.

6. Product according to any of the previous claims formulated as a preparation in a form suitable for distribution on a plant production area, **characterized in, that** the total amount of the components (a, b, c and d) in the preparation is 1 to 100 kg calculated as dry matter per ha of the plant production area.

7. Product according to any of the previous claims formulated as a preparation in a form suitable for distribution on a plant production area, **characterized in, that** the total amount of the components (a, b, c and d) in the preparation is 10 to 50 kg calculated as dry matter per ha of the plant production area.

8. Product according to any of the previous claims, **characterized in, that** it includes a carrier material acceptable for plant production.

9. A process for the preparation of the natural product according to any one of the previous claims, **characterized by** mixing together least two of the following active substance containing components (a - d):
a) a component derived from quillaja *(Quillaja saponaria).*
b) a component derived from quinoa *(Chenopodium quinoa* ).
c) a component derived from tea *(Camellia* spp., e.g. *Camellia oliefera, Camellia sinensis, Camellia chekiangoleosa, C.drupifera, C.reticulata og C.japonica).*
d) a component derived from a saponin containing plant material not belonging to (a), (b) or (c),
optionally with a suitable liquid or solid carrier or one or more conventional adjuvants or additives or any combination thereof.

10. Use of a product according to one or more of the previous claims for protection of plants and yield improvement in plant production.
